# FASCICULE DE BREVET EUROPEEN

(11) **EP 0 670 251 B1**
(45) Date de publication et mention de la délivrance du brevet: **23.12.1998**
(21) Numéro de dépôt: 95440009.9
(22) Date de dépôt: 03.03.1995
(51) Int. Cl.: B60R 25/10, G01C 9/12, G01C 9/06

(54) **Dispositif de détection d'une variation d'inclinaison, destiné notamment aux véhicules automobiles**
Vorrichtung zur Erfassung einer Veränderung der Neigung eines Kraftfahrzeugs
Device for detecting variation in inclination for vehicles

(30) Priorité: 04.03.1994 FR 9402695
(43) Date de publication de la demande: 06.09.1995
(73) Titulaire: ELECTRO UNIVERS DIFFUSION, F-34380 St. Martin de Londres (FR)
(72) Inventeur: Latorre, Jack, F-34730 Prades-le-Lez (FR); Espinadel, Gérard, F-30900 Nimes (FR)
(74) Mandataire: Arbousse-Bastide, Jean-Claude Philippe

(56) Documents cités:
- EP-A- 0 259 513
- EP-A- 0 261 443
- DE-A- 2 942 551
- DE-A- 3 208 811
- US-A- 4 703 315
- US-A- 4 716 534
- PATENT ABSTRACTS OF JAPAN vol. 11, no. 48 (M-561) (2495) 13 Février 1987 & JP-A-61 211 150 (MATSUSHITA ELECTRIC WORKS) 19 Septembre 1986
- PATENT ABSTRACTS OF JAPAN vol. 7, no. 71 (M-202) (1216) 24 Mars 1983 & JP-A-58 000 443 (ADACHI JIMUSHIYO) 5 Janvier 1983
- PATENT ABSTRACTS OF JAPAN vol. 10, no. 256 (P-493) (2312) 2 Septembre 1986 & JP-A-61 084 514 (OMRON TATEISI ELECTRONICS) 30 Avril 1986

## Description

La présente invention a pour objet un dispositif de détection d'une variation d'inclinaison, destiné notamment aux véhicules automobiles.

Actuellement on observe que les vols de véhicules automobiles sont de plus en plus souvent effectués à l'aide de systèmes de levage lourds comme par exemple des grues automobiles permettant de soulever l'arrière du véhicule, dont les roues sont bloquées par le frein à main, pour ensuite le remorquer.

On connaît déjà des dispositifs permettant de détecter les variations d'inclinaison d'un véhicule, tels que le dispositif décrit dans le document FR-A-2.374.617, qui comporte un disque monté en rotation dans un boîtier fermé de façon étanche et rempli d'un liquide d'amortissement, ledit disque étant transparent à l'exception d'une surface, ou masque, en forme de secteur, dont la position peut être déterminée à l'aide de divers éléments de lecture comme des photodiodes ou des phototransistors placés dans des lumières pratiquées en regard l'une de l'autre dans les parois dudit boîtier, la variation en mesure d'angle étant calculée par un centre de traitement.

Le document GB-A-2.120.882 décrit un dispositif comprenant un secteur supporté par un axe, apte à tourner autour de celui-ci dans un plan vertical, par effet de gravité, entre les branches d'un socle en forme de U, des ouvertures étant ménagées à la base dudit secteur, alors que sur l'une des branches du U sont placées des diodes électroluminescentes, en regard desquelles sont disposés, sur l'autre branche, des photocapteurs détectant une différence entre les signaux reçus et les signaux de référence lors d' une variation d'inclinaison du secteur.

Le document EP-A-0 261 443 porte sur un inclinomètre qui permet de détecter une tentative de soulèvement d'un véhicule grâce à un pendule magnétique oscillant entre deux bobines d'induction placées sur un circuit électrique.

Le document US-A-4 703 315 décrit un dispositif détecteur d'inclinaison qui comprend deux plaques en matériau non conducteur portant des éléments conducteurs en relief reliés à une carte électronique connectée électriquement à une batterie, et entre lesquelles est placé un pendule également connecté à la carte électronique et à la batterie, et apte à établir avec les éléments conducteurs en relief un contact électrique permettant à la carte électronique d'en déduire ou non l'inclinaison du véhicule et d'émettre ou non un signal activant une alarme sonore.

Toutefois, bien que les résultats obtenus avec ces dispositifs soient assez satisfaisants, quelques inconvénients subsistent. En effet tous ces systèmes mettent en oeuvre un mécanisme qui ne peut se trouver que dans deux états fournissant chacun une information électrique différente. L'alarme risque ainsi d'être déclenchée prématurément, lorsque par exemple le véhicule est stationné à cheval sur un trottoir et que l'on se trouve à la frontière d'un état, l'inertie de l'élément pendulaire étant telle que le moindre choc sur le véhicule le déplace angulairement sans qu'il revienne nécessairement dans la position où il était avant le choc, et sa nouvelle position pouvant commander le déclenchement d'une alarme alors qu'il n'y a pas de soulèvement effectif du véhicule significatif de son enlèvement.

Les différents systèmes connus fonctionnent ainsi plus comme des détecteurs de chocs que comme des détecteurs d'un changement d'assiette en liaison avec le vol du véhicule.

La présente invention a pour but de remédier à ces inconvénients en proposant un dispositif électronique permettant de ne déclencher une alarme que lorsque les roues avant ou arrière d'un véhicule sont décollées du sol.

Le dispositif selon l'invention comprend une plaque en matériau non conducteur sur laquelle sont disposés des éléments conducteurs en relief reliés à une carte électronique connectée électriquement à la batterie et au contact d'allumage du véhicule, et sur laquelle est en outre fixé un bras mobile monté en rotation autour d'un axe perpendiculaire au plan de la dite plaque et connecté à ladite carte électronique et à la batterie du véhicule, ledit bras mobile étant apte à établir avec lesdits éléments conducteurs en relief un contact électrique permettant à la carte électronique d'en déduire ou non le vol du véhicule et d'émettre ou non un signal activant une alarme sonore. Ce dispositif se caractérise essentiellement en ce que l'alarme n'est déclenchée que lorsque le déplacement du bras mobile fournit à la carte électronique trois informations successives confirmant un changement d'assiette du véhicule lié au décollement de ses roues avant ou arrière.

La plaque mise en oeuvre dans le dispositif selon l'invention peut être un secteur angulaire ou un disque, selon le mode de réalisation choisi, et elle est réalisée en une matière plastique dure comme par exemple une résine époxy.

Le bras mobile mis en oeuvre dans le dispositif selon l'invention peut être un bras métallique ou un bras en matière plastique muni à son extrémité d'un élément conducteur en saillie prolongé d'un fil conducteur enfermé dans le bras et connecté à la carte électronique et à la batterie du véhicule.

Dans un premier mode de réalisation du dispositif selon l'invention la plaque mise en oeuvre est un secteur angulaire monté fixement et les éléments conducteurs présentent la forme de repères en relief disposés radialement à la base dudit secteur et espacés régulièrement en formant des ensembles de trois repères successifs a,b et c, les repères de la famille a étant connectés entre eux de même que les repères des familles b et c, chaque famille de repères étant également reliée au circuit électronique relié d'autre part à la batterie du véhicule et au contact d'allumage, tandis que l'axe de rotation du bras mobile est fixé au sommet du secteur et orienté à environ 45ø par rapport à l'axe longitudinal du véhicule, ledit bras mobile ayant une longueur sensiblement égale au rayon dudit secteur et possèdant à son extrémité inférieure un élément en saillie apte à effleurer les éléments conducteurs en relief en établissant avec eux un contact électrique générateur d'une grandeur électrique qui est traitée par la carte électronique, un déplacement dudit élément en saillie sur trois repères successifs déclenchant une alarme.

Dans ce premier mode de réalisation, l'alarme est déclenchée après que le dispositif ait analysé trois informations, une première information d'initialisation du système correspondant à l'état du véhicule à l'arrêt, quelle que soit son inclinaison par rapport au sol, lorsque le moteur est coupé; une deuxième information correspondant à une modification de l'assiette du véhicule; et une troisième information confirmant ce changement d'assiette en liaison avec le décollement des roues avant ou arrière.

Dans ce premier mode de réalisation du dispositif selon l'invention l'extrémité supérieure du bras mobile est préférentiellement solidarisée à un moyeu de fer doux d'une certaine masse pouvant pivoter sur un axe perpendiculaire audit secteur et en regard duquel se trouve un solénoïde, ou une bobine, entourant un noyau de fer doux, relié au circuit électronique et destiné à gérer le déplacement du bras mobile en le bloquant en position ou en le libérant lorsque la bobine n'est plus alimentée, ce qui rend alors inopérant le frein électromagnétique et permet au bras mobile de reprendre sa position d'équilibre stable selon la loi de la pesanteur.

Le bras mobile du dispositif selon l'invention peut être avantageusement immobilisé lorsque la voiture est utilisée, ce qui assure au dispositif une longévité importante.

On a calculé que pour décoller les roues arrières ou avant d'un véhicule il fallait soulever celui-ci d'au moins trois degrés, en sorte que dans un mode de réalisation préféré de l'invention les éléments conducteurs sont espacés de façon que dans un angle de trois degrés environ en partant de l'axe de rotation du bras mobile se trouvent au moins trois repères successifs a, b et c.

Dans un deuxième mode de réalisation du dispositif selon l'invention la plaque mise en oeuvre est un disque qui comporte deux butées réalisées en un matériau conducteur, disposées à courte distance l'une de l'autre et entre lesquelles peut se déplacer librement le bras mobile réalisé également en un matériau conducteur, l'ensemble formé par le bras mobile et les butées constituant un interrupteur de commande d'un moteur dont l'axe de sortie est solidarisé perpendiculairement audit disque et est destiné à ramener le bras mobile, par l'intermédiaire du disque, dans sa position d'équilibre, en s'arrêtant dès que ledit bras mobile n'est plus en contact avec l'une des deux butées. Le déplacement angulaire de l'axe moteur correspondant au retour vers la position d'équilibre du bras mobile entre les deux butées induit une donnée représentative dudit déplacement qui, lorsqu'elle est supérieure à une certaine valeur de consigne, entraîne le déclenchement d'une alarme.

Dans ce mode de réalisation la carte électronique est telle que si le bras mobile oscille entre les deux butées, par exemple lorsque le véhicule subit un simple choc et non un soulèvement effectif significatif d'un enlèvement, il ne se produit rien.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue schématique du secteur angulaire selon un premier mode de réalisation du dispositif selon l'invention.
- la figure 2 représente le schéma de la carte électronique d'un dispositif selon l'invention.
- la figure 3 représente le schéma de fonctionnement du dispositif selon l'invention dans un deuxième mode de réalisation.
- la figure 4 représente une vue de face du disque selon ce deuxième mode de réalisation du dispositif selon l'invention.

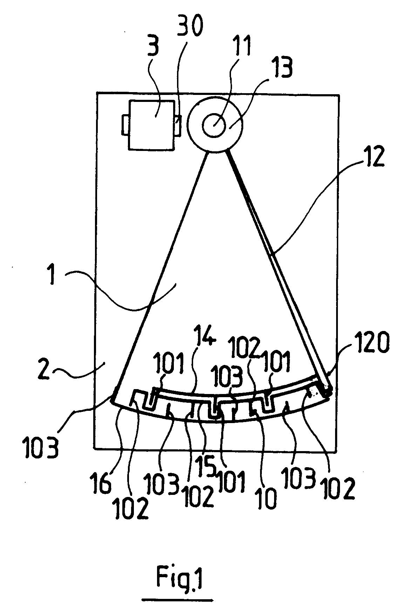

Si on se réfère à la figure 1 on peut voir que le dispositif selon l'invention comprend un secteur angulaire 1, par exemple en résine époxy, à la partie basse duquel sont gravés, sur un angle de 30 degrés environ, des repères métalliques en relief 10 espacés régulièrement et disposés radialement; un axe 11 fixé au sommet du secteur 1 ; un bras mobile ou pendule 12 connecté à une tension de 12 volts fournie par la batterie du véhicule, à l'extrémité supérieure duquel est disposé un moyeu de fer doux 13 pivotant sur l'axe 11 tandis qu'à son extrémité inférieure une partie 120 est destinée à effleurer, lors d'une variation en angle du pendule, les repères métalliques 10 ; et une carte électronique 2 connectée aux repères 10, qui forment trois ensembles de trois repères 101, 102 et 103 disposés de manière que dans un angle de trois degrés an partant de l'axe 11 on trouve au moins un repère 101, un repère 102 et un repère 103.

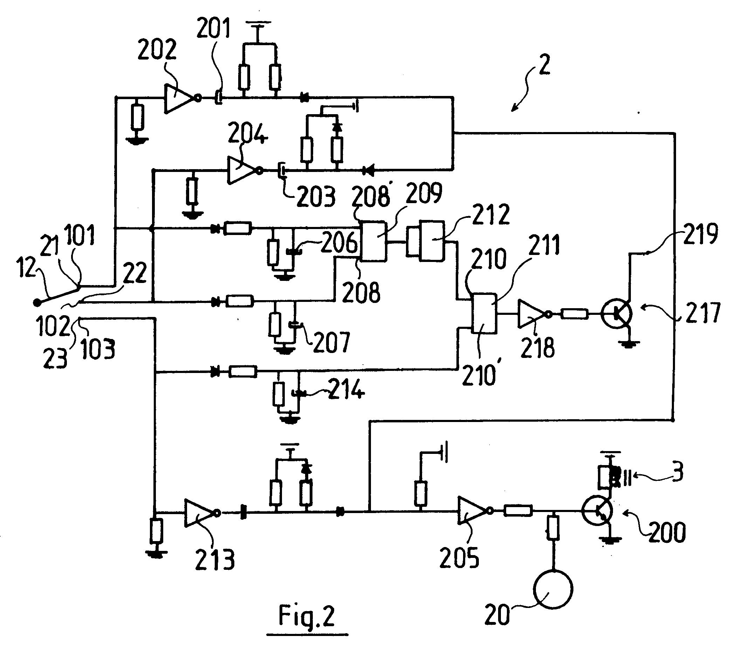

L'ensemble des repères 101 sont reliés entre eux par une piste conductrice 14 reliée d'autre part à une entrée 21 de la carte électronique 2, l'ensemble des repères 102 sont également reliés entre eux par une piste conductrice 15 reliée à une entrée 22 de la carte 2, de même que l'ensemble des repères 103, reliés entre eux par une piste conductrice 16 reliée à une entrée 23 de la carte 2, les entrées 21, 22 et 23 étant visibles sur la figure 2.

En regard du moyeu de fer doux 13 est placé un solénoïde 3 relié à la carte 2 et abritant un noyau de fer doux 30. Lorsque le solénoïde 3 est alimenté le pendule 12 est immobilisé par l'action des forces électromagnétiques s'exerçant sur le moyeu 13, ce qui permet d'une part de contrôler en permanence le déplacement du pendule 12 et d'autre part d'assurer au dispositif une durée de vie importante en immobilisant le pendule 12 lors de l'utilisation du véhicule.

Si on se réfère maintenant à la figure 2 on peut voir sur cette figure la carte électronique 2, le pendule 12 en contact avec un repère 101, les deux repères suivants 102 et 103, et la bobine 3.

La carte électronique 2 comprend notamment deux transistors NPN 200 et 217 montés en émetteur commun ; cinq inverseurs 202, 204, 205, 213, 218; trois portes NON-ET 209, 211, 212 ; cinq condensateurs 201, 203, 206, 207, 214.

Dans l'hypothèse où le véhicule est en circulation, la clé de contact étant en position de marche il apparaît une tension de 12 volts en 20, mettant le transistor 200 à l'état saturé, permettant à la bobine 3 d'être alimentée et donc d'immobiliser le pendule 12.

Lorsque le conducteur arrête le véhicule la tension de 12 volts en 20 disparaît et la bobine 3 n'est plus alimentée, ce qui libère le pendule 12 qui va prendre sa position d'équilibre stable lorsque la partie 120 du pendule 12 se trouve par exemple en contact avec le repère 101.

La capacité 201 étant chargée il ne se passe rien au niveau de l'inverseur 202, tandis que le pendule dans sa position en 101 maintient le condensateur 206 chargé.

Supposons maintenant que le véhicule soit incliné de telle sorte que le pendule 12 balaye les repères successifs 102 et 103, puis éventuellement le repère 101 pour retrouver sa position d'équilibre stable.

Quand le pendule 12 entre en contact avec le repère 102 dans son parcours vers son équilibre stable, l'entrée de l'inverseur 204 est au niveau logique 1 associé à la valeur 12 volts, ce qui a pour effet de mettre la sortie de l'inverseur 205 au niveau 1 pendant la durée de la charge du condensateur 203, le transistor 200 est saturé et la bobine 3 est alimentée, bloquant le pendule 12 par effet électromagnétique pendant un certain temps t au cours duquel la capacité 207 se charge et donne un niveau logique 1 sur l'entrée 208 correspondante de la porte logique NON-ET 209, l'autre entrée 208' de cette porte étant également au niveau logique 1, la sortie de la porte 209 étant au niveau zéro ce qui a pour effet de mettre l'entrée 210 de la porte NON-ET 211 au niveau 1 par l'intermédiaire de l'inverseur 212.

Les condensateurs 206 et 207 restent chargés pendant un temps t₁ et quand le condensateur 203 est chargé la sortie de l'inverseur 205 passe à zéro et libère le frein électromagnétique permettant au pendule 12 de continuer sa course vers sa position d'équilibre stable pour établir le contact avec le repère 103.

L'état de l'inverseur 213 change alors et sa sortie passe à zéro, la sortie de l'inverseur 205 repassant au niveau 1 immobilise le pendule 12, qui reste au contact du repère 103.

A ce moment-là le condensateur 214 se charge et l'entrée 210' de la porte 211 passe au niveau 1 et comme l'autre entrée 210 est maintenue au niveau 1 par la charge des condensateurs 206 et 207, l'état de sortie de la porte 211 est au niveau zéro et le transistor 217 est à l'état saturé par l'intermédiaire de l'inverseur 218 et se comporte donc comme un interrupteur fermé qui permet la mise en fonction de l'alarme du véhicule, non représentée.

La même étude logique du circuit montre que si le pendule, dans sa course vers l'équilibre stable, ne parcourt que deux repères 101 et 102, ou 102 et 103, ou 103 et 101, par exemple, l'alarme ne peut pas être déclenchée.

Le dispositif détecteur d'assiette d'un véhicule selon l'invention traite donc chronologiquement trois informations, gérées par un frein électromagnétique , empêchant ledit dispositif de fonctionner comme un simple détecteur de choc.

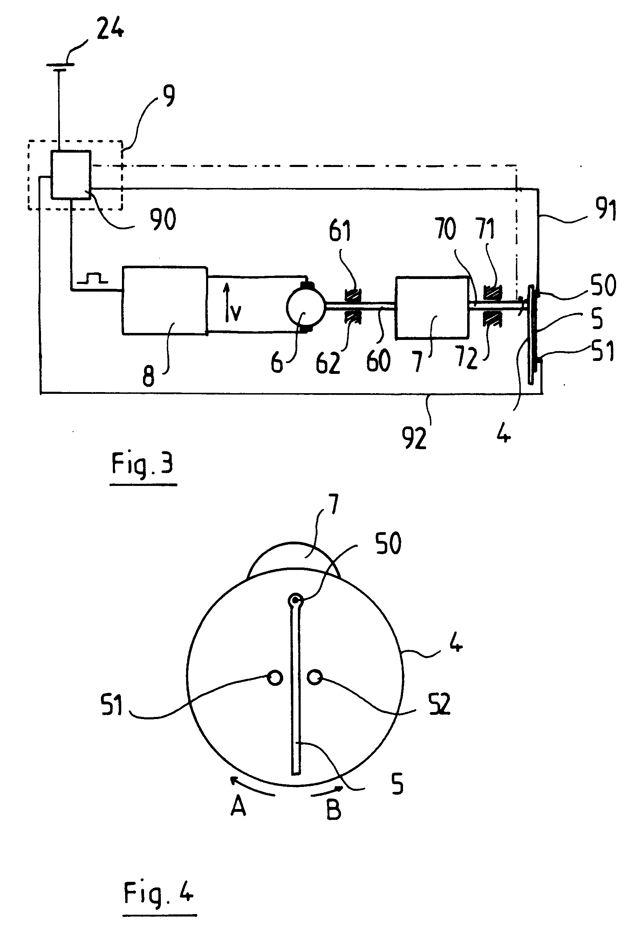

Si on se réfère maintenant à la figure 3 on peut voir que dans un deuxième mode de réalisation le dispositif selon l'invention comprend un disque 4 comportant à sa partie supérieure un axe 50 autour duquel est monté en libre rotation un pendule 5 susceptible d'osciller entre deux butées 51 et 52, dont une seulement 51 est visible sur la figure, l'axe 50 et le pendule 5 étant réalisés en un matériau électriquement conducteur et le disque 4 pouvant en outre osciller autour d'un axe perpendiculaire à son plan.

Le déplacement angulaire du disque 4 est réalisé au moyen d'un micro-moteur 6 dont l'axe de sortie 60, maintenu entre deux paliers 61 et 62, est relié à un réducteur 7 dont l'axe de sortie 70, maintenu entre deux paliers 71 et 72, est solidarisé au disque 4. Le micro-moteur 6 est commandé en fonctionnement, à travers un amplificateur 8, par un microcontrôleur 90 appartenant à une carte électronique 9 et relié d'une part au pendule 5 par l'intermédiaire de l'axe 50 et d'autre part aux deux butées 51 et 52 et à la batterie 24 du véhicule à travers le démarreur.

Sur la figure 4 on peut voir le disque 4 et le pendule 5 en position d'équilibre, c'est à dire non en contact avec les butées 51 et 52 qui limitent son déplacement angulaire.

L'ensemble formé par le pendule 5 et les butées 51 et 52 constitue un interrupteur qui commande d'une part le fonctionnement du moteur 6 lorsque le pendule 5 est en contact avec l'une ou l'autre des deux butées 51 ou 52 et d'autre part son arrêt en fonctionnement lorsque le pendule 5 n'est plus en contact avec les butées 51 ou 52 et se trouve dans sa position d'équilibre.

Le fonctionnement du dispositif selon ce deuxième mode de réalisation est décrit ci-après:

La fermeture du circuit d'alimentation effectué par la clé de contact du véhicule actionne le moteur 6 qui amène, par l'intermédiaire de l'axe 60, le disque 4 en position d'équilibre, s'il ne l'est pas déjà. Lorsque cette position est atteinte le moteur 6 s'arrête et le dispositif se trouve alors en état de veille. Si on incline le véhicule, le disque 4 suit le mouvement d'inclinaison de sorte qu'on observe une rotation relative de ce disque 4 par rapport au pendule 5 dans le sens de la flèche B indiquée sur la figure 4, mettant en contact le pendule 5 avec la butée 51, ce qui a pour effet de fermer l'interrupteur. Le microcontrôleur 90 commande alors le micro-moteur 6 en fonctionnement en faisant tourner l'axe 60 dans le sens A afin de ramener le pendule 5 dans sa position d'équilibre, le moteur étant alors arrêté. Si le moteur 6 est un moteur pas à pas, le calculateur du microcontrôleur aura alors déterminé le nombre de pas effectués par l'axe 60 durant la rotation du disque 4 jusqu'à ce que le pendule 5 soit dans sa position d'équilibre, le nombre de pas étant proportionnel à l'angle de rotation du disque 4 et donc représentatif de la valeur angulaire correspondant à l'inclinaison du véhicule. Si l'angle mesuré est supérieur à un angle de consigne, par exemple 3°, le microcontrôleur commande le déclenchement d'une alarme.

On peut également utiliser un moteur à courant continu alimenté par un signal carré alternatif, la mesure de l'angle étant alors effectuée en comptant les crénaux du signal carré.

La détection d'un soulèvement latéral d'un véhicule peut être réalisée en disposant le plan du disque parallèlement à un plan transversal du véhicule et la détection d'un soulèvement longitudinal en disposant le disque perpendiculairement à ce plan.

Si l'on veut pouvoir détecter un soulèvement latéral et dans les deux sens longitudinal et transversal on peut avantageusement disposer deux dispositifs en orientant les plans des deux disques perpendiculairement entre eux.

## Revendications

1. Dispositif de détection d'une variation d'inclinaison, destiné notamment aux véhicules automobiles, comprenant une plaque (1, 4) en matériau non-conducteur sur laquelle sont disposés des éléments conducteurs (10, 51, 52) en relief reliés à une carte électronique (2) connectée électriquement à la batterie et au contact d'allumage du véhicule, et sur laquelle est fixé un bras mobile (12,5), monté en rotation autour d'un axe (11,50) perpendiculaire au plan de la dite plaque (1,4) et connecté à ladite carte électronique (2), ledit bras mobile (12, 5) étant apte à établir avec lesdits éléments conducteurs (10,51,52) un contact électrique qui permet à la carte électronique (2) d'en déduire ou non le vol du véhicule et d'émettre un signal activant une alarme sonore ; caractérisé en ce que l'alarme n'est déclenchée que lorsque le déplacement du bras mobile (12, 5) fournit à la carte électronique (2) trois informations successives confirmant un changement d'assiette du véhicule lié au décollement de ses roues avant ou arrière.

2. Dispositif de détection selon la revendication 1 caractérisé en ce que la plaque est un secteur angulaire (1) monté fixement et en ce que les éléments conducteurs présentent la forme de repères en relief (10) disposés radialement à la base dudit secteur (1) et espacés régulièrement en formant des ensembles de trois repères successifs (101,102,103), les repères (101) étant connectés entre eux de même que les repères (102) et (103), chaque famille de repères étant également reliée à la carte électronique (2), tandis que l'axe de rotation (11) du bras mobile (12) est fixé au sommet du secteur (1) et orienté à environ 45° par rapport à l'axe longitudinal du véhicule, ledit bras mobile (12) ayant une longueur sensiblement égale au rayon dudit secteur (1) et possèdant à son extrémité inférieure un élément en saillie (120) apte à effleurer les éléments conducteurs en relief (10) en établissant un contact électrique générateur d'une grandeur électrique qui est traitée par la carte électronique (2), un déplacement dudit élément en saillie (120) sur trois repères successifs (101,102,103) déclenchant une alarme.

3. Dispositif selon la revendication 2 caractérisé en ce que l'extrémité supérieure du bras mobile (12) est solidarisée à un moyeu de fer doux (13) d'une certaine masse pouvant pivoter sur l'axe (11) perpendiculaire au secteur (1) et en regard duquel se trouve un solénoïde (3) entourant un noyau de fer doux (30), relié au circuit électronique (2) et destiné à contrôler le déplacement du bras mobile (12).

4. Dispositif selon la revendication 1 caractérisé en ce que la plaque mise en oeuvre est un disque (4) qui comporte deux butées (51,52) réalisées en un matériau conducteur, disposées à courte distance l'une de l'autre et entre lesquelles peut se déplacer librement un bras mobile (5) réalisé également en un matériau conducteur, l'ensemble formé par le bras mobile (5) et les butées (51,52) constituant un interrupteur de commande d'un moteur (6) dont l'axe de sortie (70) est solidarisé perpendiculairement audit disque (4) et est destiné à ramener le bras mobile (5), par l'intermédiaire du disque (4), dans sa position d'équilibre, en s'arrêtant dès que le bras mobile n'est plus en contact avec l'une des deux butées (51,52), le déplacement angulaire de l'axe moteur (70) correspondant au retour vers la position d'équilibre du bras mobile (5) entre les deux butées (51,52), induisant une donnée représentative dudit déplacement qui lorsqu'elle est supérieure à une certaine valeur de consigne entraîne le déclenchement d'une alarme.

## Claims

1. Device for detecting a slanting variation intended in particular for motor vehicles and including a plate (1, 4) made of a non conducting material on which conductive elements (10, 51, 52) are placed in relief connected to an electronic card (2) electrically connected to the battery and the ignition switch of the vehicle and to which a mobile arm (12, 5) is secured mounted rotating around an axis (11, 50) perpendicular to the plane of said plate (1, 4) and connected to said electronic card (2), said mobile arm (12, 5) being able to establish with said conductive elements (10, 51, 52) an electric contact which enables the electronic card (2) to deduce the possible theft of the vehicle and emitting a signal activating a sound alarm, characterised in that the alarm is only triggered when the movement of the mobile arm (12, 5) provides the electronic card (2) with three successive items of information confirming a change of attitude of the vehicle linked to the detachment of its front or rear wheels.

2. Detection device according to claim 1, characterised in that the plate is an angular sector (1) mounted fixed and in that the conductive elements have the shape of relief marks (10) disposed radially at the base of said sector (1) and regularly spaced, thus forming sets of three successive marks (101, 102, 1203), the marks (101) being interconnected in the same way as the marks (102) and (103), each family of marks also being connected to the electronic card (2), whereas the spin axis (11) of the mobile arm (12) is fixed to the top of the sector (1) and orientated at about 45° with respect to the longitudinal axis of the vehicle, said mobile arm (12) having a length approximately equal to the radius of said sector (1) and having at its lower extremity a projecting element (120) able to lightly touch the raised conductor elements (10), thus establishing an electric contact generating an electric variable processed by the electronic card (2), a movement of said projecting element (120) on three successive marks (101, 102, 103) triggering an alarm.

3. Device according to claim 2, characterised in that the upper extremity of the mobile arm (12) is rendered integral with a soft iron hub (13) having a certain mass able to pivot on the axis (11) perpendicular to the sector (1) and being opposite a solenoid (3) surrounding a soft iron core (30) connected to the electronic circuit (2) and intended to control the movement of the mobile arm (12).

4. Device according to claim 1, characterised in that the plate used is a disk (4) which comprises two stops (51, 52) made of a conductive material and disposed a short distance from each other and between which a mobile arm (5), also made of a conductive material, is able to move freely, the unit formed by the mobile arm (5) and the stops (51, 52) constituting a switch for controlling an engine (6) whose outgoing axis (70) is rendered integral perpendicular to said disk (4) and is intended to bring the mobile arm (5) by means of the disk (4) back into its steady position, thus stopping as soon as the mobile arm is no longer in contact with one of the two stops (51, 52), the angular movement of the engine axis (70) corresponding to the return to the steady position of the mobile arm (5) between the two stops (51, 52) inducing an element of data representative of said movement which, when greater than a certain reference variable, results in triggering an alarm.

## Patentansprüche

1. Insbesondere für Kraftfahrzeuge bestimmte Vorrichtung zur Feststellung einer Veränderung der Neigung bestehend aus einer Platte (1, 4) aus nicht leitendem Material , auf der leitende, mit einer elektronischen Karte (2) verbundene Elemente (10, 51, 52) erhaben angebracht sind und die elektrisch mit der Batterie und dem Zündkontakt des Fahrzeuges verbunden ist und auf der ein Dreharm (12, 5) rotierend um eine zur Ebene der genannten Platte (1, 4) senkrecht stehende und mit der genannten elektronischen Karte (2) verbundene (1,4) Achse (11, 50) angebracht ist, wobei der genannte Dreharm (12, 5) geeignet ist, mit den genannten leitenden Elementen (10, 51, 52) einen elektrischen Kontakt herzustellen, der es der elektronischen Karte (2) erlaubt, zu deduzieren, ob das Fahrzeug gestohlen wird oder nicht, und ein Signal zu aktivieren, das ein akustisches Alarmsignal abgibt; dadurch gekennzeichnet, daß der Alarm nur dann abgegeben wird, wenn die Verstellung des Dreharms (12, 5) der elektronischen Karte (2) drei aufeinander folgende Informationen liefert, die eine Veränderung des Gleichgewichtes des Fahrzeuges in Verbindung mit dem Abheben seiner Vorder- oder Hinterreifen bestätigen.

2. Vorrichtung zur Feststellung gemäß Anspruch 1, dadurch gekennzeichnet, daß die Platte ein fest angebrachter Winkelsektor (1) ist und dadurch, daß die leitenden Elemente erhabene Markierungsformen (10) aufweisen, die radial an der Basis des genannten Sektors (1) angebracht sind und regelmäßige Abstände aufweisen, wobei sie Einheiten von drei aufeinander folgenden Markierungen (101, 102, 103) bilden, wobei die Markierungen (101) miteinander verbunden sind, ebenso wie die Markierungen (102) und (103), wobei jede Markierungsgruppe ebenfalls mit der elektronischen Karte (2) verbunden ist, während die Drehachse (11) des Dreharms (12) am Oberteil des Sektors (1) befestigt ist und im Verhältnis zur Längsachse des Fahrzeugs in einem Winkel von ungefähr 45° ausgerichtet ist, wobei der genannte Dreharm (12) eine deutlich gleiche Länge wie der Strahl des genannten Sektors (1) hat und an seinem unteren Ende ein vorstehendes Element (120) besitzt, das geeignet ist, die erhabenen leitenden Elemente (10) durch Herstellen eines elektrischen Kontakts zu berühren, der eine elektrische Größe erzeugt, die von der elektronischen Karte (2) bearbeitet wird, wobei ein Fortbewegen des genannten vorstehenden Elements (120) von drei aufeinander folgenden Markierungen (101, 102, 103) weg einen Alarm auslöst.

3. Vorrichtung gemäß Anspruch 2, dadurch gekennzeichnet, daß das obere Ende des Dreharms (12) an einer Nabe aus Weicheisen (13) fest mit einer bestimmten Masse verbunden ist, die um die zum Sektor (1) senkrechte Achse (11) schwenken kann und der gegenüber sich ein einen Kern aus Weicheisen (30) umgebender Solenoid (3) befindet, der mit dem elektronischen Schaltkreis (2) verbunden und dazu bestimmt ist, die Bewegung des Dreharms (12) zu kontrollieren.

4. Vorrichtung gemäß Anspruch 1, dadurch gekennzeichnet, daß die ausgebildete Platte eine Scheibe (4) ist, die zwei aus leitendem Material hergestellte Anschläge (51, 52) umfaßt, die voneinander in kurzen Abständen angebracht sind und zwischen denen ein Dreharm (5) sich frei bewegen kann, der ebenfalls aus leitendem Material ausgebildet ist, wobei die durch den Dreharm (5) und die Anschläge (51, 52) gebildete Einheit einen Steuerschalter eines Motors (6) bildet, dessen Ausgangsachse (70) senkrecht fest mit der genannten Scheibe (4) verbunden ist und dazu bestimmt ist, den Dreharm (5) mittels der Scheibe (4) wieder in seine Gleichgewichtsstellung zu bringen, wobei er stehen bleibt, sobald der Dreharm keinen Kontakt mehr mit einem der beiden Anschläge (51, 52) hat, wobei die Winkelbewegung der Motorenachse (70) der Bewegung zurück in die Gleichgewichtsposition des Dreharms (5) zwischen den beiden Anschlägen (51, 52) entspricht, wobei er einen repräsentativen Wert der genannten Bewegung induziert, die einen Alarm auslöst, wenn sie größer ist als ein bestimmter vorgegebener Wert.
